# EUROPÄISCHE PATENTSCHRIFT

(11) **EP 0 481 357 B1**
(45) Veröffentlichungstag und Bekanntmachung des Hinweises auf die Patenterteilung: **19.04.1995**
(21) Anmeldenummer: 91117280.7
(22) Anmeldetag: 10.10.1991
(51) Int. Cl.: F16B 7/00, F16L 23/00, F16B 7/04

(54) **Handgriff für den Maschinen- und Gerätebau**
Handle for the construction of machines and implements
Poignée pour la construction de machines et d'outils

(30) Priorität: 18.10.1990 DE 4033110
(43) Veröffentlichungstag der Anmeldung: 22.04.1992
(73) Patentinhaber: Rose-Elektrotechnik GmbH + Co KG Elektrotechnische Fabrik, D-32457 Porta Westfalica (DE)
(72) Erfinder: Pohlmann, Franz F., D-32429 Minden (DE); Seligmann, Heinfred, D-31600 Uchte (DE)
(74) Vertreter: Hanewinkel, Lorenz, Dipl.-Phys.

(56) Entgegenhaltungen:
- DE-A- 2 108 342
- DE-A- 2 361 819
- DE-A- 3 401 426
- DE-A- 3 708 480
- FR-A- 2 573 823

## Beschreibung

Die Erfindung bezieht sich auf einen Handgriff für den Maschinen- und Gerätebau, der aus geraden und/oder gebogenen Rohren und einem jeweils zwei benachbarte Rohre miteinander verbindenden Verbindungsstück mit einem zwischen den Rohrenden liegenden Anlageflansch und zwei in die beiden Rohrenden eingesteckten, durch Spannschrauben gegen Innenflächenbereiche der Rohre preßbaren Spannstücken besteht, wobei das eine Spannstück des Verbindungsstückes an einer Seite des Anlageflansches zwei sich gegenüberliegende Keilplatten hat, in die ein durch eine in Rohr-Längsrichtung verlaufende, den Anlageflansch durchfassende Spannschraube einspannbarer Keil unter Auseinanderspreizung gegen die Innenflächen des Rohres der Keilplatten einziehbar ist.

Ein derartig aufgebauter Handgriff ist aus der FR-A-2 573 823 bekannt geworden; hierbei ist das Verbindungsstück nur für die Verbindung zweier rechtwinklig zueinander stehender Rohre für den Regalbau und in Verbindung mit zusätzlichen, die entstehenden freien Ecken schließenden Rohren als Support- oder Zwischenrohren und nicht für eine koaxiale Rohrverbindung einsetzbar.

Der Anlageflansch ist von einem Winkelflansch für die beiden winklig zu verbindenden Rohre gebildet und die Spannschrauben wirken nur in Rohr-Längsrichtung und nicht unmittelbar mit dem Anlageflansch, sondern mit einem zusätzlichen in den einen Eckwinkel bildenden Anlageflansch einzusetzenden Rohr zusammen, ohne das die Eckverbindung nicht erstellbar wäre.

Das Anziehen der Rohr-Stirnenden gegen den Winkel-Anlageflansch erfolgt für beide Rohre durch je eine Schraube und ein Keilstück, was in die mehrfach geschlitzten Spannstücke eingezogen wird; die Betätigung der Schrauben ist nur durch das Eckrohr hindurch möglich und hierfür muß das Eckrohr an seinen beiden sichtbaren Außenseiten Löcher zum Einstecken eines Werkzeuges haben, so daß hier an den Sichtseiten Betätigungslöcher in unerwünschter und unschöner Weise sichtbar sind.

Da jede Schraube nur in Rohr-Axialrichtung wirkt, ist ein Lösen derselben nicht ausgeschlossen, was eine Spaltbildung zwischen Anlageflansch und Rohrstirnende entstehen läßt und dadurch die Rohr-Eckverbindung löst und unsicher macht.

Aufgabe der Erfindung ist es, ausgehend vom Stand der Technik einen in individuellen Formen und Größen zusammensetzbaren Handgriff zu schaffen, dessen benachbarte Rohre durch hohe radiale Spreizkräfte stabil miteinander verbunden und durch axiale Spannkräfte spaltfrei gegen den Anlageflansch des Verbindungsstückes gehalten sind und bei dem im Verbindungsbereich nach außen nur ein einziges Betätigungsloch für eine Schraube sichtbar ist.

Diese Aufgabe wird durch die kennzeichnenden Merkmale des Patentanspruches 1 gelöst; die sich daran anschließenden Unteransprüche 2 bis 7 beinhalten Gestaltungsmerkmale, welche vorteilhafte und förderliche Weiterbildungen der Aufgabenlösung darstellen.

Der Handgriff gemäß der Erfindung ist durch einfach aufgebaute, kostensparend herstellbare und leicht zu montierende Verbindungsstücke aus den verschiedensten Rohren, wie geraden Rohren, Rohrbögen, Winkelstücken, T-Stücken oder dgl. zu einem individuellen und dem jeweiligen Anwendungszweck vorgesehenen Handgriff zusammengesetzt. Dabei kann der Benutzer sich aus den für ihn zweckdienlichen Rohrstücken mit den Verbindungsstücken den jeweils gewünschten Handgriff zusammenstellen. Hierdurch ist die Lagerhaltung wesentlich vereinfacht und kostengünstiger geworden, da die Rohre und Verbindungsstücke jeweils individuell zusammengestellt werden können und keine spezielle Anfertigung oder Lagerhaltung von unterschiedlichen Handgriffen nötig ist. Die Verbindungsstücke gehen mit den Rohrstücken eine äußerst stabile Verbindung ein und gleichzeitig werden die Rohrstücke fest und spaltfrei durch die Verbindungsstücke aneinander gezogen und zusammengehalten.

Die Rohrverbindung erfolgt durch Axial- und Radialkräfte, welche eine sichere, auch bei Belastungen, Erschütterungen oder dgl. stabile und sich auch auf längere Zeit nicht selbsttätig lockernde Verbindung ergibt.

Ein derartiger Handgriff zeigt aufgrund seiner Einfachheit und kostengünstigen Ausführung einen gesteigerten Gebrauchswert und eine vielseitige Einsatzmöglichkeit im Maschinen- und Gerätebau.

Auf den Zeichnungen ist ein Ausführungsbeispiel in Variation dargestellt, welches nachfolgend näher erläutert wird. Es zeigt:
- Fig. 1: eine perspektivische Darstellung eines Steuergehäuses mit einem aus geraden Rohren, Rohrbögen und T-Stücken gebildeten Handgriff.
- Fig. 2: einen Längsschnitt durch ein zwei benachbarte Rohre miteinander verbindendes Verbindungsstück
- Fig. 3: eine Stirnansicht des Rohres mit Verbindungsstück in Richtung "A" gesehen
- Fig. 4: eine Stirnansicht des Rohres mit Verbindungsstück in Richtung "B" gesehen
- Fig. 5: einen Längsschnitt durch ein zwei benachbarte Rohre miteinander verbindendes Verbindungsstück in abgewandelter Ausführung
- Fig. 6: einen Querschnitt durch das Rohr mit Verbindungsstück gem. Schnittlinie "C-C" in Fig. 5

Der Handgriff für den Maschinen- und Gerätebau ist aus geraden Rohren (1), Rohrbögen (2), T-Stücken (3) od. dgl. zu einer beliebigen Handgrifform zusammengesetzt. Zwei benachbarte Rohre (1 bzw. 2 bzw. 3) sind durch ein Verbindungsstück (4) miteinander verbunden, wobei dieses Verbindungsstück (4) einen zwischen den Rohrenden liegenden Anlageflansch (5) und zwei in die beiden Rohrenden eingesteckte, durch winklig zueinander wirkende der Spannschrauben (6,7) mindestens gegen Innenflächenbereiche der Rohre (1) preßbare und die Rohre (1) gegen den Anlageflansch (5) ziehende Spannstücke (8,9/8,10) aufweist.

Das Verbindungsstück (4) hat an einer Seite seines Anlageflansches (5) zwei sich gegenüberliegende Keilplatten (11), in die ein durch eine in Rohr-Längsrichtung verlaufende den Anlageflansch (5) durchfassende Spannschraube (6) einspannbarer Keil (12) unter Auseinanderpressung der Keilplatten (11) einziehbar ist. Die beiden Keilplatten (11) und der Keil (12) bilden mit der Spannschraube (6) das in ein Rohr (1) eingreifende Spannstück (8). Das Rohr (1) ist in bevorzugter Weise von einem Vierkantrohr gebildet und hat dabei einen quadratischen oder rechteckigen Querschnitt. Die beiden Keilplatten (11) liegen an sich gegenüberliegenden Kantflächen des Rohres (1) an und werden durch den Keil (12) auseinandergespreizt.

Das Spannstück (9) an der anderen Seite des Anlageflansches (5) zeigt zwei sich gegenüberliegende Druckplatten (13), die durch eine rechtwinklig zur Rohr-Längsrichtung verlaufende Spannschraube (7) gegen die Rohr-Innenflächen auseinanderspreizbar sind, wobei diese Spannschraube (7) in einer Druckplatte (13) in einem Gewinde (14) verdrehbar lagert und mit ihrem Stirnende (7a) gegen die andere Druckplatte (13) einwirkt. Diese beiden Druckplatten (13) können auch einen U-förmigen Querschnitt haben und sind dabei mit ihren beiden U-Öffnungen aufeinanderzu gerichtet angeordnet, so daß auch ihre U-Schenkel(13a) gegen die anderen beiden sich gegenüberliegenden Kantflächen des Rohres (1) als Führungen anliegen.

Die eine Druckplatte (13), und zwar die Druckplatte (13), in der das Gewinde (14) für die Spannschraube (7) vorgesehen ist, ist mit einem angeformten Spannkonus (15) ausgestattet, der in axialer Verlängerung des Gewindes (14) nach außen von der Druckplatte (13) absteht und in eine Bohrung (16) des Rohres (1) eingreift, so daß beim Auseinanderspreizen der beiden Druckplatten (13) dieser Spannkonus (15) das Rohr (1) gegen den Anlageflansch (5) drückt, in dem der Spannkonus (15) mit dem Bohrungsrand zusammenwirkt. Die beiden Druckplatten (13) mit dem Spannkonus (15) und der Spannschraube (7) ergeben das Spannstück (9).

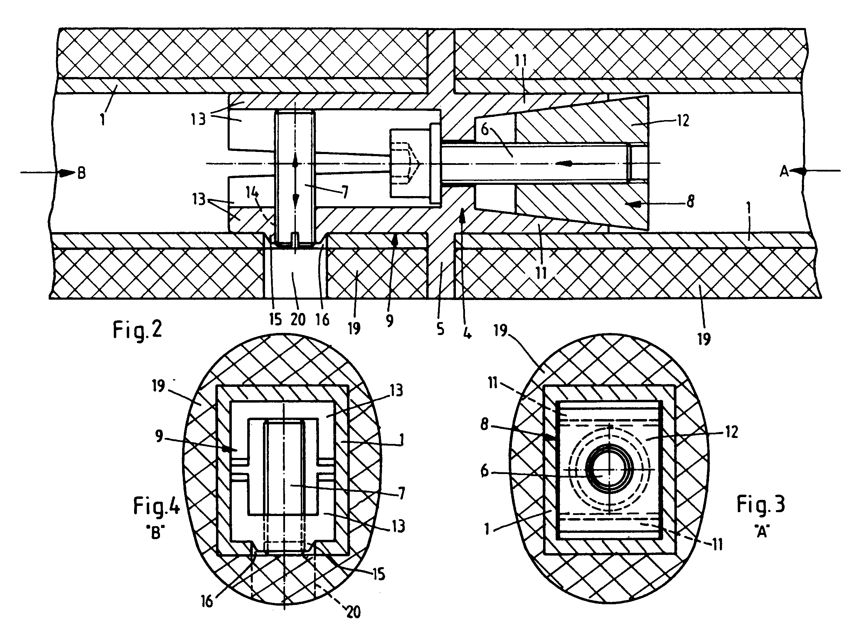

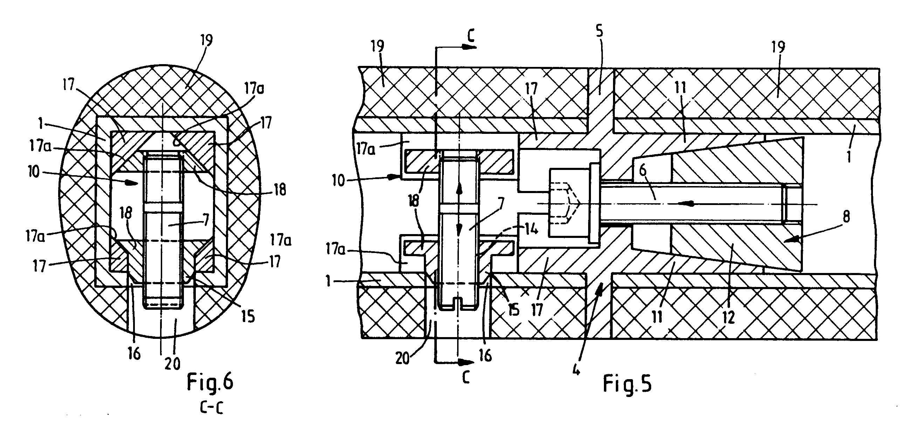

Das Verbindungsstück (4) nach Fig. 5 und 6 in der abgewandelten Ausführung entspricht im Grundaufbau dem Verbindungsstück (4) nach Fig. 2 und 4 und besitzt an einer Seite des Anlageflansches (5) das Spannstück (8). Das an der anderen Seite des Anlageflansches (5) stehende Spannstück (10) weist mehrere vorzugsweise vier Druckleisten (17) auf, die im Querschnitt dreieckförmig ausgebildet sind, mit zwei Dreieckseite (Katheten) in den Ecken des Rohres (1) liegen und deren dritte Dreieckseite (Hypothenuse) eine Keilfläche (17a) bildet. Gegen die Keilflächen (17a) zweier benachbarter Druckleisten (17) wirkt jeweils ein Keil (18) ein und beide Keile (18) werden durch eine ein Links- und Rechtsgewinde aufweisende, rechtwinklig zur Rohr-Längsrichtung verlaufende Spannschraube (7) gegen die Druckleisten (17) gepreßt, wodurch diese vier Druckleisten (17) radial nach außen in die Ecken des Rohres (1) auseinandergespreizt werden, so daß insgesamt acht Anlageflächen zwischen Druckleisten (17) und Rohr (1) vorhanden sind. Die Spannschraube (7) faßt mit ihrem jeweiligen Gewinde in die beiden Keile (18) ein und aus dem einen Keil (18) durch die Bohrung (16) aus dem Rohr (1) heraus. Dieser Keil (18) besitzt ebenfalls den Spannkonus (15) zum Anpressen des Rohres (1) gegen den Anlageflansch (5). Die Verbindungsstücke (4) sind jeweils einstückig aus Metall, wie Stahl, Aluminium od. dgl. gebildet. Um jedes Rohre (1, 2, 3) ist ein Griffmantel (19) aus Kunststoff, beispielsweise Weich-PVC gespritzt, wobei dieser Griffmantel (19) einen beliebigen Querschnitt, vorzugsweise einen ovalen Querschnitt haben kann. Entsprechend dem Außenquerschnitt des Griffmantels (19) ist auch der Anlageflansch (5) in seiner Grundform gestaltet, so daß der Anlageflansch (5) außen bündig mit dem Griffmantel (19) abschließt.Zur Betätigung der Spannschraube (7) zeigt der Griffmantel (19) in Verlängerung der Rohrbohrung (16) ein Durchsteckloch (20) für ein Werkzeug.

Die Verbindung zweier benachbarter Rohre durch das Verbindungsstück (4) geschieht folgendermaßen:
Zuerst wird das Spannstück (8) mit seinen beiden Keilplatten (11) und dem dazwischen durch die Spannschraube (6) lose gehaltenen Keil (12) in ein Rohr (1) eingesteckt und der Anlageflansch (5) gegen das Rohrstirnende gedrückt. Dann wird die Spannschraube (6) angezogen, so daß der Keil (12) durch axiales Verschieben die Keilplatten (11) nach außen gegen die sich gegenüberliegenden Innenflächen des Rohres (1) spreizt und dadurch eine feste Anlage der Keilplatten (11) im Rohr (1) und des Anlageflansches (5) am Rohrstirnende steht. Danach wird in das andere mit den Löchern (16, 20) vorbereitete Rohr (1) das andere Spannstück (9/10) eingesteckt und dann stößt dieses Rohr (1) ebenfalls gegen den Anlageflansch (5). Nunmehr wird die Spannschraube (7) verdreht, so daß die Druckplatten (13) bzw. die Druckleisten (17) nach außen gespreizt werden und sich ebenfalls fest an die Innenflächen des Rohres (1) anlegen. Beim Anziehen der Spannschraube (7) wird gleichzeitig der Spannkonus (15) in die Bohrung (16) des Rohres (1) hineingedrückt, so daß dadurch über die Bohrungskante das Rohr (1) fest gegen den Anlageflansch (5) geschoben und gehalten wird. Durch diesen Spannkonus (15) werden gleichzeitig eventuelle Toleranzen in der Länge des Rohres (1) zwischen Bohrung (16) und Stirnende ausgeglichen. Die beim Ablängen des Rohres (1) entstehen können.

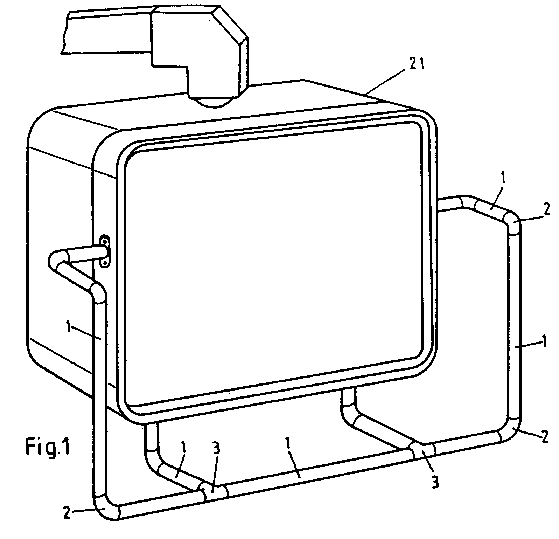

Diese Handgriffverbindung läßt sich sowohl bei geradlinig aneinanderstoßenden Rohren (1) als auch bei geradlinigen Rohren (1) und Bogenstücken (2) und auch bei Rohren (1) und T-Stücken (3), sowie in deren Kombination durchführen, so daß Handgriffe der verschiedensten Größe und Form gebildet werden können. Derartige Handgriffe lassen sich bei den verschiedensten Maschinen und Geräten einsetzen, beispielsweise an Steuergehäusen (1) vgl. Fig. 1, an Steuertafeln, Computergeräten, Zeichnungsablagen, Zeichnungshaltern, Schreibunterlagen etc. .

## Patentansprüche

1. Handgriff für den Maschinen- und Gerätebau, der aus geraden und/oder gebogenen Rohren (1, 2) und einem jeweils zwei benachbarte Rohre (1, 2) miteinander verbindenden Verbindungsstück (4) mit einem zwischen den Rohrenden liegenden Anlageflansch (5) und zwei in die beiden Rohrenden eingesteckten, durch Spannschrauben (6, 7) gegen Innenflächenbereiche der Rohre (1, 2) preßbaren Spannstücken (8, 9) besteht, wobei das eine Spannstück (8) des Verbindungsstückes (4) an einer Seite des Anlageflansches (5) zwei sich gegenüberliegende Keilplatten (11) hat, in die ein durch eine in Rohr-Längsrichtung verlaufende, den Anlageflansch (5) durchfassende Spannschraube (6) einspannbarer Keil (12) unter Auseinanderspreizung gegen die Innenflächen des Rohres (1) der Keilplatten (11) einziehbar ist, dadurch gekennzeichnet, daß
das andere Spannstück (9/10) des Verbindungsstückes (4) an der anderen Seite des Anlageflansches (5) zwei sich gegenüberliegende Druckplatten (13) oder vier Druckleisten (17) mit Keilflächen (17a) hat, wobei die beiden Druckplatten (13) durch eine rechtwinklig zur Rohr-Längsrichtung verlaufende, in einer Druckplatte (13) verdrehbar gelagerte Spannschraube (7) und die vier Druckleisten (17) durch zwei auf deren Keilflächen (17a) einwirkende Keile (18) und eine rechtwinklig zur Rohr-Längsrichtung verlaufende, ein Links- und Rechtsgewinde aufweisende Spannschraube (7) gegen die Innenflächen des Rohres (1) auseinanderspreizbar sind und
daß eine Druckplatte (13) bzw. ein Keil (18) mit einem angeformten, nach außen vorstehenden Spannkonus (15) ausgestattet ist, der von der Spannschraube (7) durchfaßt ist und in eine Bohrung (16) des Rohres (1) beim Auseinanderspreizen der Druckplatte (13) bzw. des Keiles (18) hineingedrückt wird, wodurch das Rohr (1) mit seinem Stirnende in Rohr-Längsrichtung gegen den Anlageflansch (5) gepreßt wird.

2. Handgriff nach Anspruch 1, dadurch gekennzeichnet, daß das Rohr (1) von einem Vierkantrohr mit quadratischem oder rechteckigem Querschnitt gebildet ist.

3. Handgriff nach Anspruch 1 und 2, dadurch gekennzeichnet, daß die Druckplatten (13) des Spannstückes (9) von U-Profilen gebildet sind, die mit ihren U-Öffnungen aufeinanderzu gerichtet angeordnet sind und mit ihren U-Stegen gegen sich gegenüberliegende Kantflächen des Rohres (1) und mit ihren U-Schenkeln (13a) als zusätzliche Führungen gegen die beiden anderen sich gegenüberliegenden Rohr-Kantflächen anliegen.

4. Handgriff nach Anspruch 1 und 2, dadurch gekennzeichnet, daß die vier Druckleisten (17) des Spannstückes (10) einen dreieckförmigen Querschnitt haben, mit zwei Dreieckseiten in den Ecken des Rohres (1) liegen und mit ihrer dritten Dreieckseite eine Keilfläche (17a) bilden, dabei jeweils gegen zwei Keilflächen (17a) der beiden benachbarten Druckleisten (17) ein Keil (18) einwirkt und die Spannschraube (7) in einen Keil (18) eingreift und den anderen Keil (18) durchfaßt und aus der Bohrung (16) des Rohres (1) herausragt.

5. Handgriff nach einem der Ansprüche 1 bis 4, dadurch gekennzeichnet, daß das Verbindungsstück (4) mit seinem Anlageflansch (5) und den beiden Spannstücken (8, 9/10) einstückig aus Metall, wie Stahl, Aluminium, od. dgl., gebildet ist.

6. Handgriff nach einem der Ansprüche 1 bis 5, dadurch gekennzeichnet, daß um jedes Rohr (1/2/3) jeweils ein Griffmantel (19) aus Kunststoff geformt ist, der vorzugsweise eine ovale Querschnittsform hat und im Bereich der Bohrung (16) des Rohres (1/2/3) mit einem Durchsteckloch für ein Werkzeug zur Betätigung der Spannschraube (7) ausgestattet ist.

7. Handgriff nach einem der Ansprüche 1 bis 6, dadurch gekennzeichnet, daß der Anlageflansch (5) des Verbindungsstückes (4) mit seiner äußeren Grundform bündig mit dem Griffmantel (19) abschließt.

## Claims

1. Handle for machine and equipment units, consisting of straight and/or bent tubes (1, 2) and a connecting piece (4) joining together a respective two adjacent tubes (1, 2) with a contact flange (5) between the tube ends and two bracing pieces (8, 9) inserted into the two tube ends and adapted to be pressed by locking screws (6, 7) against internal surface regions of the tubes (1, 2), one bracing piece (8) of the connecting piece (4) having on one side of the contact flange (5) two opposing wedge plates (11) into which a wedge (12) adapted to be tautened by a locking screw (6) extending in the longitudinal direction of the tube and engaging through the contact flange (5) can be splayed apart against the inner surfaces of the tube (1) so as to pull in the wedge plates (11), characterised in that
on the other side of the contact flange (5) the other bracing piece (9/10) of the connecting piece (4) has two opposing pressure plates (13) or four pressure strips (17) with cuneiform surfaces (17a), the two pressure plates (13) being adapted to be splayed apart against the inner surfaces of the tube (1) by a locking screw (7) extending at right angles to the longitudinal direction of the tube and mounted for rotation in a pressure plate (13), and the four pressure strips (17) being adapted to be splayed apart by two wedges (18) which act on the cuneiform surfaces thereof (17a) and a locking screw (7) which extends at right angles to the longitudinal direction of the tube and features a left-hand and right-hand thread, and that
a pressure plate (13), or wedge (18), is equipped with a moulded-on, outwardly protruding locking cone (15) through which the locking screw (7) engages and which is pushed into a bore (16) in the tube (1) as the pressure plate (13) or wedge (18) is being splayed apart, thereby pressing the tube (1) by its front end against the contact flange (5) in the longitudinal direction of the tube.

2. Handle according to claim 1, characterised in that the tube (1) is constituted by a rectangular tube of square or rectangular cross-section.

3. Handle according to claims 1 and 2, characterised in that the pressure plates (13) of the bracing piece (9) are constituted by U-sections arranged with their U-openings directed at one another and bear with the lands of said U against opposing rim surfaces of the tube (1) and bear with their U-side-pieces (13a) as additional guides against the other two opposing tube rim surfaces.

4. Handle according to claims 1 and 2, characterised in that the four pressure strips (17) of the bracing piece (10) have a triangular cross-section, are situated with two sides of the triangle in the corners of the tube (1) and with their third side of the triangle form a cuneiform surface (17a), and acting in each case upon two cuneiform surfaces (17a) of the two adjacent pressure strips (17) is a wedge (18) and the locking screw (7) engages in one wedge (18) and bites through the other wedge (18) and projects from the bore (16) of the tube (1).

5. Handle according to any of claims 1 to 4, characterised in that the connecting piece (4) with its contact flange (5) and the two bracing pieces (8, 9/10) is constituted in one piece from a metal such as steel, aluminium or the like.

6. Handle according to any of claims 1 to 5, characterised in that a gripping sheath (19) of plastic is respectively moulded around each tube (1/2/3) and said gripping sheath (19) is preferably oval in cross-section and in the vicinity of the bore (16) of the tube (1/2/3) is equipped with a through-hole for a tool for actuating the locking screw (7).

7. Handle according to any of claims 1 to 6, characterised in that the basic outer contour of the contact flange (5) of the connecting piece (4) ends flush with the gripping sheath (19).

## Revendications

1. Poignée pour la construction de machines et d'outils, composée de tubes (1, 2) droits et/ou courbés et d'une pièce de raccordement (4) qui réunit deux tubes (1, 2) voisins et présente une bride d'appui (5), placée entre les deux extrémités des tubes, ainsi que deux pièces de serrage (8, 9), enfichées dans les deux extrémités des tubes et pouvant être pressées contre les surfaces intérieures des tubes (1, 2) à l'aide de vis de serrage (6, 7), une pièce de serrage (8) de la pièce de raccordement (4) étant pourvue, sur un côté de la bride d'appui (5), de deux plaques (11) opposées l'une à l'autre, dans lesquelles une cale, serrable à l'aide d'une vis de serrage (6), s'étendant dans le sens longitudinal du tube et traversant la bride d'appui 85), peut être insérée par écartement des plaques (11) et pression contre les surfaces intérieures du tube (1),
caractérisée en ce que
l'autre pièce de serrage (9/10) de la pièce de raccordement (4), de l'autre côté de la bride d'appui (5), présente deux plaques de pression (13), situées vis-à-vis l'une de l'autre, ou quatre baguettes de pression (17) avec surface (17a), les deux plaques de pression (13) pouvant être écartées et pressées contre les surfaces intérieures du tube (1) par une vis de serrage (7) s'étendant à angle droit par rapport au sens longitudinal du tube et logée, pivotante, dans une plaque de pression (13), et les quatre baguettes de pression (17) pouvant être écartées et pressées contre les surfaces intérieures du tube (1) par deux cales (18) agissant sur leurs surfaces (17a), ainsi que par une vis de serrage (7) à filetage gauche et droit,
qu'une plaque de pression (13) resp. une cale (18) est équipée d'un cône de serrage (15) en saillie vers l'extérieur, lequel est traversé par la vis de serrage (7) et est pressé dans une forure (16) du tube (1) lors de l'écartement de la plaque de pression (13) resp. de la cale (18), l'extrémité frontale du tube étant pressé contre la bride d'appui (5), dans le sens longitudinal du tube.

2. Poignée selon la revendication 1,
caractérisée en ce que
le tube (1) est un tube à 4 pans, de section transversale carrée ou rectangulaire.

3. Poignée selon les revendications 1 ou 2,
caractérisée en ce que
les plaques de pression (13) de la pièce de serrage (9) sont formées par des profilés en U, les côtés ouverts des U étant dirigés les uns vers les autres, tandis que les dos des U portant contre les bords opposés du tube (1) et les branches (13a) portant, en tant que guidages supplémenatires, contre les deux autres bords opposés du tube.

4. Poignée selon la revendication 1 et 2,
caractérisée en ce que
les quatre baguettes de pression (17) de la pièce de serrage (10) présentent une coupe transversale triangulaire et sont placées, avec deux côtés du triangle, dans les coins d'un tube (1), tandis que le troisième côté du triangle forme une surface à cale (17a) une cale (18) agissant contre chacune des deux surfaces (17a) des deux baguettes de pression voisines (17), la vis de serrage (1) mordant dans une cale (18), et traversant l'autre cale (18) et faisant saillie hors de la forure (16) du tube (1).

5. Poignée selon l'une des revendications 1 à 4,
caractérisée en se que
la pièce de raccordement (4), avec sa bride d'appui (5) et les deux pièces de serrage (8, 9/10), est formée d'une pièce, en métal, tel que acier, aluminium ou analogue.

6. Poignée selon l'une des revendications 1 à 5,
caractérisée en ce que
une poignée (19) en matière plastique gaine chaque tube (1/2/3), laquelle présente, préférentiellement, une coupe transversale ovale et est pourvue, dans la zone de la forure (16) du tube (1/2/3) d'un trou d'insertion d'outil aux fins d'actionnement de la vis de serrage (7).

7. Poignée selon l'une des revendications 1 à 6,
caractérisée en ce que
la bride d'appui (5) de la pièce de raccordement (4), dans sa forme de base extérieure, se termine à fleur de la gaine de poignée (19).
